# EUROPEAN PATENT APPLICATION

(11) **EP 3 598 789 A1**
(43) Date of publication of application: **22.01.2020**
(21) Application number: 18766699.5
(22) Date of filing: 08.01.2018
(51) Int. Cl.: H04W 24/02

(54) **OPTIMIZED DETERMINATION METHOD AND DEVICE FOR PCI CONFUSION**

(30) Priority: 16.03.2017 CN 201710157354
(71) Applicant: ZTE Corporation, Shenzhen, Guangdong 518057 (CN)
(72) Inventor: TANG, Lin, Shenzhen Guangdong 518057 (CN)
(74) Representative: Hervouet-Malbec, Sylvie
(86) International application number: PCT/CN2018/071746
(87) International publication number: WO 2018/166285

(57) **Abstract**

Disclosed in the present disclosure are an optimized determination method and device for physical cell identity (PCI) confusion. The method includes: detecting cells that are adjacent to a serving cell and have a same frequency point and a same PCI with each other to serve as candidate PCI confusion cells; pairing the candidate PCI confusion cells to obtain all candidate PCI confusion cell pairs; determining a degree of influence of each candidate PCI confusion cell pair on communication performance; and determining a corresponding candidate PCI confusion cell pair to be a PCI confusion cell pair needing PCI optimization according to the degree of influence.

## Description

### FIELD OF THE INVENTION

The present disclosure relates to a Long Term Evolution (LTE) system in the field of mobile communication technologies, and in particular, to an optimized determination method and device for Physical Cell Identifier (PCI) confusion.

### BACKGROUND

PCI is a physical layer identifier used to uniquely identify a cell in an LTE network, wherein a User Equipment (UE) in the LTE distinguishes wireless signals of different cells by using the PCI. The LTE system includes, for example, a total of 504 PCIs. When there are a number of cells in the LTE network of the same-frequency networking, PCI multiplexing is inevitable. In other words, multiple cells use the same PCI. However, PCI multiplexing may lead PCI conflict and PCI confusion. During operation of PCI in an initially planned network, the PCI conflict and PCI confusion may be caused due to the change of local cell frequency point and PCI of base station (Evolved NodeB, eNodeB) in LTE and the change of PCI and frequency point of external cell of the eNodeB, the addition or deletion of the external cell, or the addition or deletion of the neighboring cell relationship in the eNodeB. In the PCI confusion detection and optimization scheme in the related art, as long as the PCI confusion is detected, PCI reallocation will be performed. This will result in the deletion and establishment caused by unnecessary PCI reallocation, thereby affecting the experience of the UE.

### SUMMARY

According to one aspect of the present disclosure, there is provided an optimized determination method for Physical Cell Identifier (PCI) confusion. The method includes steps of: detecting cells that are adjacent to a serving cell and have a same frequency point and a same PCI with each other to serve as candidate PCI confusion cells; pairing the candidate PCI confusion cells to obtain all candidate PCI confusion cell pairs by pairing any two of the candidate PCI confusion cells to one candidate PCI confusion cell pair; determining a degree of influence of each candidate PCI confusion cell pair on communication performance; and determining a corresponding candidate PCI confusion cell pair to be a PCI confusion cell pair needing PCI optimization according to the degree of the influence of each candidate PCI confusion cell pair on the communication performance.

In an embodiment according to the aspect, the step of detecting the cells that are adjacent to the serving cell and have the same frequency point and the same PCI with each other to serve as the candidate PCI confusion cells, includes: determining whether the same PCI corresponds to at least two different E-UTRAN Cell Global Identifiers (ECGIs) by using an ECGI measurement report from a User Equipment (UE), wherein in the case where it is determined that the same PCI corresponds to at least two different ECGIs, the respective cells corresponding to the at least two different ECGIs are determined to be the candidate PCI confusion cells.

In an embodiment according to the aspect, the step of determining the degree of the influence of each candidate PCI confusion cell pair on the communication performance includes: calculating a total optimization possibility coefficient of each candidate PCI confusion cell pair, and determining the degree of the influence according to the total optimization possibility coefficient.

In an embodiment according to the aspect, the step of calculating the total optimization possibility coefficient of each candidate PCI confusion cell pair includes: calculating the total optimization possibility coefficient of each candidate PCI confusion cell pair by using at least one of a first optimization possibility coefficient, a second optimization possibility coefficient, a third optimization possibility coefficient, and a fourth optimization possibility coefficient of each candidate PCI confusion cell pair, wherein the first optimization possibility coefficient of each candidate PCI confusion cell pair is determined according to a value of a Reference Signal Receiving Power (RSRP) of an ECGI measurement report from the UE; the second optimization possibility coefficient of each candidate PCI confusion cell pair is determined according to a number of a corresponding serving cell of the each candidate PCI confusion cell pair; the third optimization possibility coefficient of each candidate PCI confusion cell pair is determined according to handover performance between the each candidate PCI confusion cell pair and a corresponding serving cell of the each candidate PCI confusion cell pair; and the fourth optimization possibility coefficient of each candidate PCI confusion cell pair is determined according to a PCI multiplexing distance between two candidate PCI confusion cells in the each'.

In an embodiment according to the aspect, the step of determining the corresponding candidate PCI confusion cell pair to be the PCI confusion cell pair needing PCI optimization according to the degree of the influence of each candidate PCI confusion cell pair on the communication performance includes: comparing the total optimization possibility coefficient of each candidate PCI confusion cell pair with a preset total coefficient threshold; and determining a candidate PCI confusion cell pair with the total optimization possibility coefficient greater than the preset total coefficient threshold to be the PCI confusion cell pair needing PCI optimization.

According to another aspect of the present disclosure, there is provided an optimized determination device for cell PCI confusion. The device includes: a detection module, configured to detect cells that are adjacent to a serving cell and have a same frequency point and a same PCI with each other to serve as candidate PCI confusion cells; a pairing module, configured to pair the candidate PCI confusion cells to obtain all candidate PCI confusion cell pairs by pairing any two of the candidate PCI confusion cells to one candidate PCI confusion cell pair; a calculation module, configured to determine a degree of influence of each candidate PCI confusion cell pair on communication performance; and a determination module, configured to determine a corresponding candidate PCI confusion cell pair to be a PCI confusion cell pair needing PCI optimization according to the degree of the influence of each candidate PCI confusion cell pair on the communication performance.

According to another aspect of the present disclosure, there is provided an optimized determination method for cell PCI confusion of an LTE network of a co-frequency networking. The method includes: for each cell in the LTE network, judging whether at least two cells outside of the cell having a same frequency point and a same PCI are detected by using an ECGI measurement report from a UE, wherein if a judgment result is yes, the cell is considered as a serving cell, and the at least two cells having the same frequency point and the same PCI are considered as the candidate PCI confusion cells corresponding to the serving cell; for each serving cell in the LTE network, pairing the candidate PCI confusion cells to obtain all candidate PCI confusion cell pairs corresponding to the serving cell by pairing any two of the candidate PCI confusion cells corresponding to the serving cell to one candidate PCI confusion cell pair; and determining whether to perform PCI optimization for each candidate PCI confusion cell pair according to a degree of influence of the each candidate PCI confusion cell pair on communication performance.

### BRIEF DESCRIPTION OF THE DRAWINGS

FIG. 1 is a schematic diagram of PCI conflict;
FIG. 2 is a schematic diagram of PCI confusion;
FIG. 3 is a block diagram of an optimization method for PCI confusion according to an embodiment of the present disclosure;
FIG. 4 is a block diagram of an optimization device for PCI confusion according to an embodiment of the present disclosure;
FIG. 5 is a block diagram of elemental modules of PCI conflict/confusion detection and optimization;
FIG. 6 is a flow chart of an optimized determination method for PCI confusion according to a fifth embodiment.
FIG. 7 is a flow chart of an optimized determination method for PCI confusion according to seventh to ninth embodiments.

### DETAILED DESCRIPTION OF THE EMBODIMENTS

As mentioned above, when there is a number of cells in the LTE network of the same-frequency networking, PCI multiplexing is inevitable.

The following two basic principles should be met when the PCI plans is assigned:
1) Non-conflict of PCI: a radio cell cannot use the same PCI with a co-frequency neighboring cell having the same frequency point.

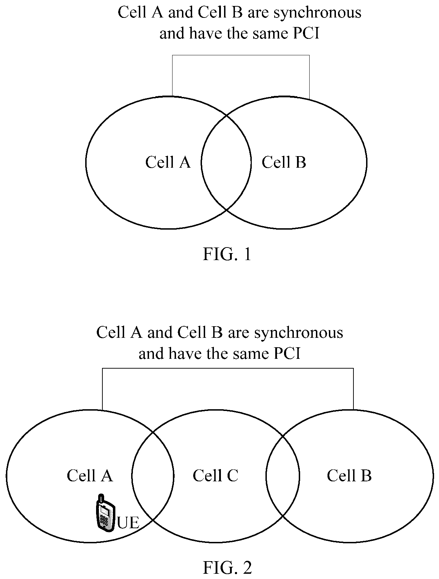

   FIG. 1 is a schematic diagram of PCI conflict. Referring to FIG.1, if two or more co-frequency cells having the same frequency point and the same PCI are geographically adjacent or have a small interval, the UE cannot realize the signal synchronization and decoding in the signal overlapping area between the two or more co-frequency cells.
2) Non-confusion of PCI: multiple co-frequency neighboring cells in a radio cell cannot use the same PCI.

FIG. 2 is a schematic diagram of PCI confusion. Referring to FIG.2, two cells having the same frequency point and the same PCI are isolated in terms of coverage area, but they are neighboring cells of the same cell. In this way, when the UE measures and reports the PCI confusion, confusion may occur to the UE during handover, such that a handover target cell of the UE cannot be determined and thus the UE may be dropped due to handover failure. For example, cell A and cell B have the same frequency point and the same PCI, cell C has a neighboring cell relationship with the cell B, and the cell C and the cell A may also have a neighboring cell relationship. The PCI measured by the UE at the location in FIG. 2 is actually a signal of the cell A. After the UE reports a measurement report, the cell C may match the cell B according to PCI information in a neighboring cell table then sends a handover request HO Request to the cell B. After the cell B returns an ACK, the cell C notifies the UE to initiate random access. However, the UE initiates access to the cell A according to RRC reallocation message, resulting in an access failure.

During the operation of the PCI in the initially planned network, the PCI conflict and PCI confusion may be caused due to the change of local cell frequency point and PCI of base station (Evolved NodeB, eNodeB) in LTE and the change of PCI and frequency point of external cell of the eNodeB, the addition or deletion of the external cell, or the addition or deletion of the neighboring cell relationship in the eNodeB. Therefore, it is necessary to detect PCI conflict and confusion in a timely fashion through some detection means and optimize the cell PCI, that is, reallocate a new PCI without conflict and confuse.

PCI conflict may cause serious interference between neighboring cells, and the UE cannot distinguish signals from different cells, which must be avoided. Therefore, during the operation of PCI in the initially planned network, PCI reallocation will occur as long as PCI confusion is detected.

However, for PCI confusion, the present inventor has found that the PCI confusion may exist in multiple neighboring cells, but there is no impact on handover success rate. For example, the UE is less switched to the neighboring cells having the PCI confusion, or in the detected PCI confusion, one PCI confusion cell is from a distant cross-coverage cell and the UE can always successfully handover. In this scenario, optimizing PCI confusion is of little significance since PCI reallocation usually leads to the deletion and establishment of the cell so as to necessarily migrate on-line users and prohibit new users and handover users to access to the cell. Therefore, the influence on the UE is relatively significant.

In PCI confusion detection and optimization scheme in the prior art, during the operation of PCI in initially planned network, PCI reallocation will be performed as long as PCI confusion is detected. This will result in cell deletion and establishment caused by unnecessary PCI reallocation, thereby affecting experience of the UE.

Embodiments of the present disclosure are described in detail below with reference to the drawings. It is to be understood that the embodiments described below are merely for the descriptive and illustrative purpose and are not intended to limit the present disclosure.

### First Embodiment

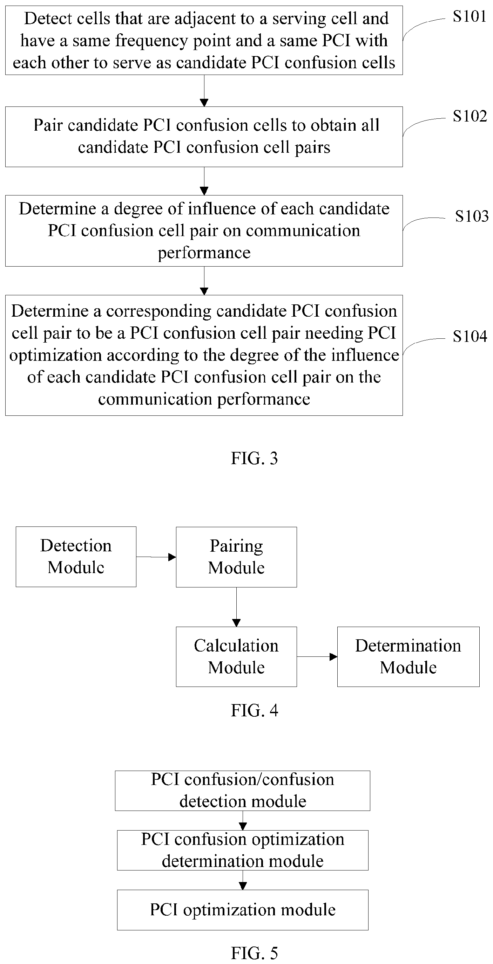

FIG. 3 is a block diagram of an optimization method for PCI confusion according to an embodiment of the present disclosure. Referring to FIG.3, steps of the optimization method for PCI confusion includes:
Step S101: detecting cells that are adjacent to a serving cell and have a same frequency point and a same PCI with each other to serve as candidate PCI confusion cells.

In the embodiment, as an example, Step S101 may include: determining whether the same PCI corresponds to at least two different E-UTRAN Cell Global Identifiers (ECGIs) by using an ECGI measurement report from the UE, wherein if it is determined that the same PCI corresponds to at least two different ECGIs, the respective cells corresponding to the at least two different ECGIs are determined as the candidate PCI confusion cells.

If at least two cells having the same PCI exist in neighboring cells having the same frequency as a certain cell, then these cells with the same frequency and PCI are PCI confusion cells with respect to each other.

In Step S101, the candidate PCI confusion cell is detected by using the ECGI measurement report from the UE of the serving cell.

Specifically, firstly, the ECGI detection on the neighboring cell of the serving cell is performed by the UE. The ECGI may include a Public Land Mobile Network (PLMN), a Cell Identifier, and an RSRP, so as to globally identify a cell in the PLMN. For the PCI corresponding to a neighboring cell, if the UE reports multiple different ECGIs, it is indicated the PCI confusion appears. For example, A is a serving cell, a neighboring cell B of which corresponds to PCI 3, and a UE in the cell A performs ECGI detection to the cell with the PCI 3 and reports two different ECGIs which corresponds to the cell B and the cell C, respectively, that is, the serving cell A is an intermediate cell of the cell B and the cell C, and the cells B and C are a candidate PCI confusion cell pair corresponding to the serving cell A. One of the cells B and C is a home cell, and the other is an opposite cell.

Step S102: pairing the candidate PCI confusion cells to obtain all candidate PCI confusion cell pairs by pairing any two of the candidate PCI confusion cells to one candidate PCI confusion cell pair.

Specifically, in Step S102, any two of candidate PCI confusion cells with the same frequency point and the same PCI with each other are paired to obtain all candidate PCI confusion cell pairs in the end. For example, one PCI corresponds to four different ECGIs, which are the ECGI1 to the ECGI4, respectively. The candidate PCI confusion cell pairs obtained by pairing at this time include: (ECGI1, ECGI2), (ECGI1, ECGI3), (ECGI1, ECGI4), (ECGI2, ECGI3), (ECGI2, ECGI4), and (ECGI3, ECGI4).

Step S103: determining a degree of influence of each candidate PCI confusion cell pair on communication performance.

In the embodiment, as an example, Step S103 may include: calculating a total optimization possibility coefficient of each candidate PCI confusion cell pair, and determining the degree of the influence according to the total optimization possibility coefficient. In other words, the degree of the influence of each candidate PCI confusion cell on communication performance can be measured by the total optimization possibility coefficient.

Herein, the total optimization possibility coefficient can be calculated through the following steps: calculating the total optimization possibility coefficient of each candidate PCI confusion cell pair by using at least one of a first optimization possibility coefficient, a second optimization possibility coefficient, a third optimization possibility coefficient, and a fourth optimization possibility coefficient of each candidate PCI confusion cell pair, wherein the first optimization possibility coefficient of each candidate PCI confusion cell pair is determined according to a value of a reference signal receiving power (RSRP) in the ECGI measurement report from the UE; the second optimization possibility coefficient of each candidate PCI confusion cell pair is determined according to a number of the serving cell corresponding to the each candidate PCI confusion cell pair; the third optimization possibility coefficient of each candidate PCI confusion cell pair is determined according to handover performance between the each candidate PCI confusion cell pair and a corresponding serving cell of the each candidate PCI confusion cell pair; and the fourth optimization possibility coefficient of each candidate PCI confusion cell pair is determined according to a PCI multiplexing distance between two candidate PCI confusion cells of the each candidate PCI confusion cell pair.

Step S104, determining a corresponding candidate PCI confusion cell pair to be a PCI confusion cell pair needing PCI optimization according to the degree of the influence of each candidate PCI confusion cell pair on the communication performance.

In the embodiment, as an example, Step S104 may include: comparing the total optimization possibility coefficient of each candidate PCI confusion cell pair with a preset total coefficient threshold, wherein if a total optimization possibility coefficient of one of the candidate PCI confusion cell pairs is greater than a preset total coefficient threshold, the candidate PCI confusion cell pair is determined to be the PCI confusion cell pair needing PCI optimization.

As described above, the ECGI measurement report from the UE of the serving cell can be used to determine whether one PCI corresponds to multiple different ECGIs. If the PCI corresponds to multiple different ECGIs, PCI confusion can be determined. However, due to the particularity and complexity of radio environment, measurement result by the UE may have randomness. For example, an ultra-remote coverage cell has no neighboring cell relationship with respect to the serving cell; however, the UE may detect the ultra-remote coverage cell in an ECGI measurement and find that a PCI of the ultra-remote coverage cell is identical to the PCI of the neighboring cell of the serving cell, and thus the UE determines that the PCI of the ultra-remote coverage cell is confused with the neighboring cell (in this case, the ultra-remote coverage cell may be considered as a missing neighboring cell of the serving cell). In addition, some cells have complex geographic locations. Although a cell does not have a neighboring relationship with the serving cell, the UE may detect a weak signal from the cell via multiple reflections of obstacles in an ECGI measurement and find a PCI of the cell is identical to the PCI of a neighboring cell of the serving cell, and thus the UE may also misidentify it as PCI confusion. Therefore, according to this embodiment, prior to the PCI confusion optimization, by obtaining all the candidate PCI confusion cell pairs (Step S102), the degree of the influence of each candidate PCI confusion cell pair on the communication performance can be determined (Step S 103), then the PCI confusion cell pair needing PCI optimization can be determined according to the degree of the influence of each candidate PCI confusion cell pair on the communication performance (Step S104). In this way, the need of optimizing the candidate PCI confusion cell pair can be judged in advance to avoid unnecessary optimization. Therefore, the cell deletion and establishment due to the unnecessary PCI reallocation can be avoided, thereby improving the UE experience.

In this embodiment, as an example, all candidate PCI confusion cell pairs of each cell in the LTE network may be obtained at one time, so as to obtain a set of candidate PCI confusion cell pairs of all cells. The PCI confusion cell pair needing PCI optimization in the LTE network can be selected according to the degree of influence of each of different candidate PCI confusion cells in the set on the communication performance. In this way, PCI confusion optimization can be performed on the entire LTE network at one time.

It can be understood by those people skilled in the art that all or part of the steps of the method in the foregoing embodiments may be implemented by instructing related hardware by a program. The program may be stored in a computer readable storage medium. In other words, a computer readable storage medium is also provided in an embodiment, wherein the computer program is stored. When the program is executed by a processor, the following steps are implemented:
detecting cells that are adjacent to a serving cell and have the same frequency point as each other and the same PCI to serve as candidate PCI confusion cells;
pairing the candidate PCI confusion cells to obtain all candidate PCI confusion cell pairs by pairing any two of candidate PCI confusion cells to one candidate PCI confusion cell pair;
determining a degree of influence of each candidate PCI confusion cell pair on the communication performance; and
determining the corresponding candidate PCI confusion cell pair to be a PCI confusion cell pair needing PCI optimization according to the degree of the influence of each candidate PCI confusion cell pair on communication performance.

Herein, the storage medium may be a ROM/RAM, a magnetic disk, and an optical disk, for example.

### Second Embodiment

FIG. 4 is a block diagram of an optimization device for PCI confusion according to an embodiment of the present disclosure. Referring to FIG.4, the device includes a detection module, a pairing module, a calculation module and a determination module.

The detection module is configured to detect cells that are adjacent to a serving cell that have the same frequency point as each other and the same PCI to serve as candidate PCI confusion cells. In the embodiment, as an example, the detection module is configured to determine whether the same PCI corresponds to at least two different ECGIs by using the ECGI measurement report from the UE, wherein if it is determined that the same PCI corresponds to at least two different ECGIs, the cells corresponding to the at least two different ECGIs are determined as the candidate PCI confusion cells.

The pairing module is configured to pair the candidate PCI confusion cells to obtain all candidate PCI confusion cell pairs. In the embodiment, as an example, the pairing module is configured to pair any two of detected candidate PCI confusion cells to obtain all possible candidate PCI confusion cell pairs.

The calculation module is configured to determine a degree of influence of each candidate PCI confusion cell pair on the communication performance. In the embodiment, as an example, the degree of the influence of each candidate PCI confusion cell pair on the communication performance is determined through calculating a total optimization possibility coefficient of each candidate PCI confusion cell pair by the calculation module. In the embodiment, as an example, the calculation module may determine a first optimization possibility coefficient of each candidate PCI confusion cell pair according to a value of RSRP of the ECGI measurement report from the UE; a second optimization possibility coefficient of each candidate PCI confusion cell pair according to the number of the serving cell corresponding to each candidate PCI confusion cell pair; a third optimization possibility coefficient of each candidate PCI confusion cell pair according to handover performance between each candidate PCI confusion cell pair and the corresponding serving cell; and a fourth optimization possibility coefficient of each candidate PCI confusion cell pair according to a PCI multiplexing distance between two candidate PCI confusion cells of each candidate PCI confusion cell pair. Then the calculation module may calculate the total optimization possibility coefficient of each candidate PCI confusion cell pair by using at least one of the first optimization possibility coefficient, the second optimization possibility coefficient, the third optimization possibility coefficient, and the fourth optimization possibility coefficient of each candidate PCI confusion cell pair. In the embodiment, as an example, the calculation module is configured to calculate only a part of the first to the fourth optimization possibility coefficients, and calculate the total optimization possibility coefficient of each candidate PCI confusion cell pair according to the part of coefficients.

The determination module is configured to determine the corresponding candidate PCI confusion cell pair to be the PCI confusion cell pair needing PCI optimization according to the degree of the influence of each candidate PCI confusion cell pair on the communication performance. In the embodiment, as an example, the determination module is configured to compare the total optimization possibility coefficient of each candidate PCI confusion cell pair with a preset total coefficient threshold, wherein if a total optimization possibility coefficient of one of the candidate PCI confusion cell pairs is greater than the preset total coefficient threshold, the candidate PCI confusion cell pair is determined to be the PCI confusion cell pair needing PCI optimization.

### Third Embodiment

FIG. 5 is a block diagram of elemental modules of PCI conflict/confusion detection and optimization according to the embodiment. Referring to FIG.5, it is possible to judge whether to perform PCI reallocation after detecting the PCI confusion. PCI conflict/confusion detection and optimization involve the following three modules: a PCI conflict/confusion detection module (at least implementing the function of the detection module in FIG. 4), a PCI confusion optimization determination module (at least implementing the function of the pairing module, the calculation module and the determination module in FIG. 4) and a PCI optimization module.

The PCI conflict/confusion detection module is mainly used for detecting PCI conflict/confusion in the network and reporting it to the PCI confusion optimization determination module.

The PCI confusion optimization determination module is mainly used for collecting the detected PCI conflict/confusion, and making a determination strategy according to information such as the number of the PCI conflict/confusion, key performance indicator (Key Performance Indicator KPI) (e.g., handover performance) saved by the network management. The PCI confusion optimization determination module determines whether to optimize the detected confusion PCI and send the confusion PCI information needing optimization to the PCI optimization module.

The PCI optimization module is mainly used for optimizing the conflict/confuse PCI that is determined to have a necessity of optimization by the PCI confusion optimization determination module, that is, reallocating a new PCI without conflict and confusion and meeting other requirements (for example, different PCI modes of neighboring cells, and requirements on numbers of PCI multiplexing layer, etc.,).

### Fourth Embodiment

In the embodiment, when determining the degree of the influence of each candidate PCI confusion cell pair on the communication performance, that is, calculating the total optimization possibility coefficient of each candidate PCI confusion cell pair, at least one of the following factors should be considered:
1. The ECGI measurement report from the UE is collected, and the RSRP of the measured received signal in the report is recoded. Since the ECGI measured by the UE may be of contingency, the ECGI measured by the UE may be discriminated to a certain extent by a strength value of the RSRP. If the RSRP of the received signal measured by the UE is very low, the present measurement is not reliable and may be of contingency. The necessity of optimizing the corresponding candidate PCI confusion cell pair is reduced.
2. After all the candidate PCI confusion cell pairs are obtained through the ECGI measurement report from the UE, all the candidate PCI confusion cell pairs are collated according to the following Table 1. Here, it is assumed that one candidate PCI confusion cell in the candidate PCI confusion cell pair is a home cell, the other candidate PCI confusion cell is an opposite cell, and the cell corresponding to the home cell and the opposite cell is the serving cell (the same candidate PCI confusion cell pair may correspond to multiple serving cells). The numbers of the serving cells are arranged in descending order.

**Table 1: Pairing Table of candidate PCI confusion cell pair of the fourth embodiment**

| Home cell Cell ID | Opposite cell Cell ID | Number of serving cell (intermediate cell) |
|---|---|---|
| | | 4 |
| | | 4 |
| | | 3 |
| | | 3 |
| | | 3 |
| | | 3 |
| | | 2 |
| | | 2 |
| | | 2 |
| | | 1 |
| | | 1 |
| | | 1 |

The number of the serving cells in Table 1 indicates the number of the serving cells of the same candidate PCI confusion cell pair that is detected. The more serving cells in Table 1, the lower chance of the candidate PCI confusion cell pair would be detected. The more serving cells are affected by the candidate PCI confusion cell pair, the higher necessity of optimizing the candidate PCI confusion cell pair would be.
3. KPI historical record of the serving cell assists in judging whether the detected candidate PCI confusion cell really affects the performance of the serving or not. Specifically, the number of handover attempts and handover success rate from each serving cell to the candidate PCI confusion cell (the home cell and the opposite cell) in the candidate PCI confusion cell pair is counted. After the number of handover attempt reaches a certain statistical value, if the handover success rate is low, which is likely to be caused by PCI confusion, the necessity for optimizing the candidate PCI confusion cell pair would be relatively high.
4. PCI multiplexing distance of each candidate PCI confusion cell pair is considered. The detected candidate PCI confusion cell pair may have no influence on the handover performance of the serving cell. However, the coverage of the two cells may be overlapped due to the closer distance between the candidate PCI confusion cell pairs, which may affect the access performance of the UE. In this case, the necessity for optimization for the candidate PCI confusion cell pair would be high.

### Fifth Embodiment

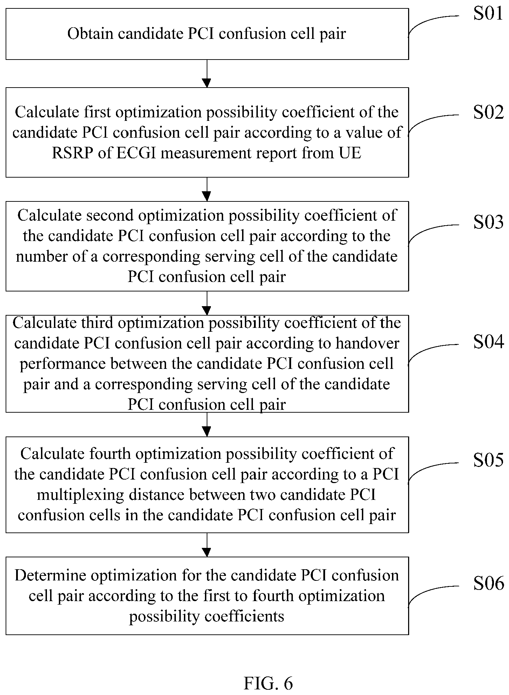

An optimized determination method for cell PCI confusion is provided in the LTE network is provided the present embodiment. FIG. 6 is a flow chart of an optimized determination method for PCI confusion according to an embodiment. As shown in the figure, the method includes steps of:
Step S01: obtaining a candidate PCI confusion cell pair. As an example, the candidate PCI confusion cell pair can be obtained according to step S101 and step S102 in the first Embodiment.
Step S02: calculating a first optimization possibility coefficient of the candidate PCI confusion cell pair according to a RSRP value of ECGI measurement report from a UE.

The ECGI measurement report from the UE corresponding to the serving cell carries a signal strength RSRP of the cell received by the UE (that is, the RSPR value of measuring and reporting ECGI by the EU). The measurement report of the UE is considered reliable only when the signal strength exceeds a certain threshold. That is to say, in the ECGI measurement report from the UE, if two or more different ECGIs are detected for the same PCI (PCI of the serving cell where the UE is not located), when the RSRP in the ECGI measurement report is greater than or equal to a preset threshold (the RSRP threshold), the ECGI measurement report is considered as valid, and accordingly the first optimization probability coefficient of the corresponding candidate PCI confusion cell pair is relatively high.

For example, the UE reports two different ECGI1 and ECGI2 (the candidate PCI confusion cell pair) for the same PCI, and the measured signal strengths are RSRP1 and RSRP2, respectively. In the case:
RSRP1 ≥ RSRP threshold and RSRP2 ≥ RSRP threshold, the first optimization possibility coefficient of the candidate PCI confusion cell pair is a1;
RSRP1 ≥ RSRP threshold and RSRP2 < RSRP threshold, the first optimization possibility coefficient of the candidate PCI confusion cell pair is a2;
RSRP1< RSRP threshold and RSRP2< RSRP threshold, the first optimization possibility coefficient of the candidate PCI confusion cell pair is a3;
wherein, a1>a2>a3.

Step S03: calculating a second optimization possibility coefficient of the candidate PCI confusion cell pair according to the number of the serving cell corresponding to the candidate PCI confusion cell pair.

For example, all the candidate PCI confusion cell pairs are sorted. Here, it is assumed that one candidate PCI confusion cell in the candidate PCI confusion cell pair is a home cell, and the other one is an opposite cell. The cell corresponding to the home cell and the opposite cell is the serving cell (the same candidate PCI confusion cell pair may correspond to multiple serving cells).The numbers of the serving cells are arranged in descending order. Herein, different optimization probability coefficients of candidate PCI confusion cell pairs may be set according to different numbers of the serving cells, for example:
the number of the serving cells corresponding to the same candidate PCI confusion cell pair ≥ the threshold of the number of the serving cell, and the second optimization possibility coefficient of the candidate PCI confusion cell pair is b1;
the number of the serving cells corresponding to the same candidate PCI confusion cell pair <the threshold of the number of the serving cell, and the second optimization possibility coefficient of the candidate PCI confusion cell pair is b2;
wherein, b1>b2.

In the embodiment, as an example, at least two different levels of threshold may be set according to the number of the serving cell, so as to divide the second optimization possibility coefficient of the candidate PCI confusion cell pair into more levels.

Step S04: calculating a third optimization possibility coefficient of the candidate PCI confusion cell pair according to handover performance between the candidate PCI confusion cell pair and the corresponding serving cell (intermediate cell).

The number of handover attempts and handover success rate from each serving cell to the candidate PCI confusion cell (the home cell and the opposite cell) of the corresponding candidate PCI confusion cell pairs in historical information for a period is counted. When counting the handover success rate, the number of handover preparation failure can be eliminated while only the number of handover execution failure is counted. This is because the handover failure caused by PCI confusion mainly occurs during the handover execution phase (the UE cannot access to the target cell). Herein, if a candidate PCI confusion cell pair corresponding to the serving cell satisfies the following two conditions, the candidate PCI confusion cell pair would be considered affecting the handover performance of the serving cell:
the number of handover attempts ≥ the PCI reallocation handover attempt threshold; and
the handover success rate ≤ the PCI reallocation handover success rate threshold.

For example, it is assumed that a cell C and a cell D are a candidate PCI confusion cell pair and serving cells corresponding to the candidate PCI confusion cell pair are a cell A and a cell B, the number of the handover attempts and handover success rate of the cell A->the cell C, the cell A->the cell D, the cell B->the cell C, the cell B->the cell D is counted, respectively. As long as the number of the handover attempts and the handover success rate of any one of the groups meet the above conditions, the optimization possibility coefficient of the candidate PCI confusion cell pair will be c1, otherwise will be c2, wherein c1>c2.

Step S05: calculating a fourth optimization possibility coefficient of the candidate PCI confusion cell pair according to a PCI multiplexing distance between the two candidate PCI confusion cells in the candidate PCI confusion cell pair.

The distance between two cells in the candidate PCI confusion cell pair is calculated according to latitude and longitude of the cells. If the distance between the two cells in the candidate PCI confusion cell pair < the PCI multiplexing distance, the fourth optimization possibility coefficient of the candidate PCI confusion cell pair is d1; if the distance between the two cells in the candidate PCI confusion cell pair ≥the PCI multiplexing distance, the fourth optimization possibility coefficient of the candidate PCI confusion cell pair is d2, wherein, d1>d2.

The PCI multiplexing distance is defined as follow: if the latitude and longitude of the serving cell is taken as an origin and the PCI multiplexing distance is used as the radius, all PCIs within such a circle are PCIs that are not able to multiplex in the serving cell. However, PCIs that are able to multiplex exist outside the circle. In general, the parameters of the PCI multiplexing distance are set in advance according to network scenes.

Step S06: performing optimization determination of the candidate PCI confusion cell pair according to all the optimization possibility coefficients obtained in the above steps S02 to S05.

Specifically, a total optimization possibility coefficient can be obtained by weighted addition of the optimization possibility coefficients of the candidate PCI confusion cell pair obtained in the above four steps. If it is satisfied the total optimization possibility coefficient of the candidate PCI confusion cell pair ≥ a total coefficient threshold, it is determined that the candidate PCI confusion cell needs optimization.

It should be noted that if some of steps S02 to S05 cannot be executed or the coefficients in some of steps are not available, for example, the handover performance is not recorded in historical information or the RSRP is not retained or collected in the ECGI measurement report from the UE, then in step S06, the weighed sum of the optimization possibility coefficients of the candidate PCI confusion cell pair obtained in the remaining steps in steps S02 to S05 is calculated. That is to say, the PCI optimization may be determined according to one or more of the above four coefficients, and it is finally determined whether the candidate PCI confusion cell pair obtained with the detection is the PCI confusion cell pair needing PCI optimization. In addition, those people skilled in the art readily understand that the order of the steps S02 to S05 is not important since the steps may be executed in any order or simultaneously.

In the embodiment, as an example, the method further includes step S07 (not shown in FIG. 6): managing the candidate PCI confusion cell pair that does not satisfy the optimization condition.

For the candidate PCI confusion cell pair that does not satisfy the optimization condition, PCI optimization will not be performed but historical record will be made. If the number of occurrences of a candidate PCI confusion cell pair in the historical record of the candidate PCI confusion cell pairs that do not satisfy the optimization condition ≥ a threshold of historical record, the candidate PCI confusion cell pair is added to a blacklist of the PCI optimization list.

Specifically, when a batch of detected PCI confusions are reported, the historical record will be searched. If it is found that a candidate PCI confusion cell pair is reported again and the corresponding serving cell does not change, then, according to the determination of the foregoing steps S02 to S06, it is determined that the candidate PCI confusion cell pair may still not need PCI optimization. By setting the historical threshold record, the candidate PCI confusing cell pairs that are determined not to satisfy the optimization condition repeatedly can be added to the blacklist of the PCI optimization list. In this way, when the report information of the candidate PCI confusion cell pair is received again and the corresponding serving cell does not change, the determination in steps S02 to S06 may not be performed and the candidate PCI confusion cell pair is directly determined to be no need for PCI optimization (this step can be performed between steps S01 and S02).

### Sixth Embodiment

An optimized determination device for cell PCI confusion in an LTE network according an embodiment, includes:
a PCI confusion optimization determination module, which employs the determination method according to the fifth embodiment to determine the reliability of PCI confusion, and provides the optimization possibility coefficient of the PCI confusion cell.

The optimized determination device may further include:
a data acquisition module, configured to collect measurement data and handover data required in the fifth embodiment, wherein, the measurement data includes the signal strength RSRP of the ECGI measurement report from the UE, and the handover data includes the number of handover and the handover success rate between the serving cell and the candidate PCI confusion cell pair in a statistical period.

The optimized determination device may further include:
a result presentation module, the output of which includes but is not limited to the following content:
(1) basic information of the candidate PCI confusion cell pair that is determined not to be optimized;
(2) further optionally, a possibility coefficient of each condition of the candidate PCI confusion cell pair not to be optimized;
(3) further optionally, whether the candidate PCI confusion cell pair not to be optimized appears in history or not.

### Seventh Embodiment

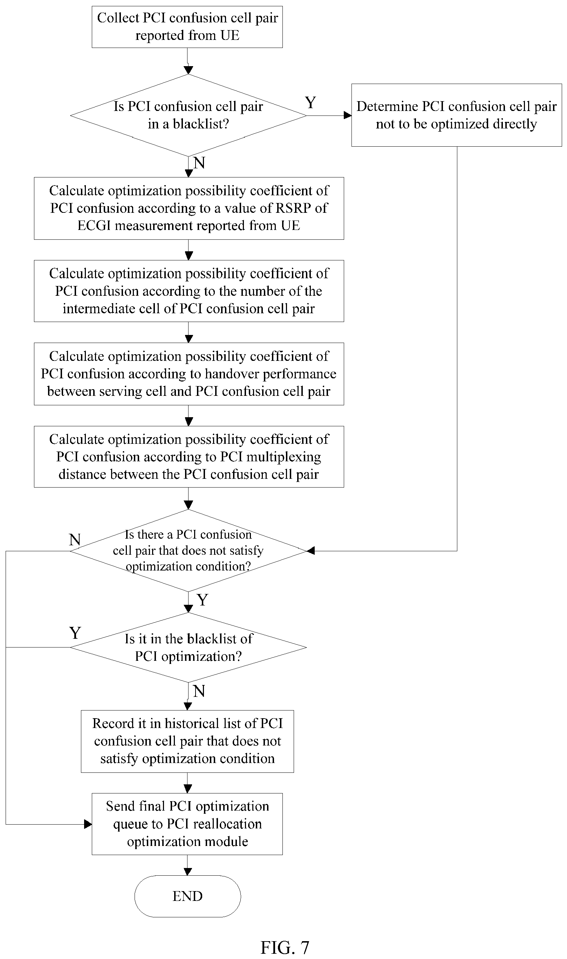

FIG. 7 is a flow chart of an optimized determination method for PCI confusion according to the present disclosure. The optimized determination for PCI confusion of the present disclosure includes steps of:
Step 201: collecting the PCI confusion reported from the UE, and judging whether each candidate PCI confusion cell pair obtained by pairing exists in a blacklist of PCI optimization list.

Three different ECGIs for the same PCI are reported from the UE: ECGI1, ECGI2, and ECGI3, the candidate PCI confusion cell pairs (ECGI1 and ECGI3), (ECGI1 and ECGI2), and (ECGI2 and ECGI3) obtained by pairing are not in the blacklist of the PCI optimization list, and thus it is necessary to proceed to judge.

Step 202: calculating a first optimization possibility coefficient of the candidate PCI confusion cell pair according to a RSRP value of the ECGI reported from a UE measurement.

When three different ECGIs for the same PCI are reported from the UE, i.e., the ECGI1, the ECGI2, and the ECGI3, measured signal strengths of RSRP1, RSRP2, and RSRP3 are -80dB, -112dB, and -100dB, respectively, and a RSRP threshold is set to -110dB. In the case where:
RSRP1 ≥ RSRP threshold and RSRP3 ≥ RSRP threshold, then a first optimization possibility coefficient of a candidate PCI confusion cell pair (ECGI1 and ECGI3) is 1;
RSRP1 ≥ RSRP threshold and RSRP2 < RSRP threshold, then a first optimization possibility coefficient of a candidate PCI confusion cell pair (ECGI1 and ECGI2) is 0.5;
RSRP3 ≥ RSRP threshold and RSRP2 < RSRP threshold, then a first optimization probability coefficient of a candidate PCI confusion cell pair (ECGI2 and ECGI3) is 0.5;
Step 203: calculating a second optimization possibility coefficient of the candidate PCI confusion cell pair according to the number of the serving cell corresponding to the candidate PCI confusion cell pair.

Three candidate PCI confusion cell pairs detected above are sorted to list the number of the serving cells corresponding to the candidate PCI confusion cell pairs, wherein a threshold of the number of the serving cell is set to 2, which will be shown in Table 2 in detail.

**Table 2: Pairing table of candidate PCI confusion cell pair in the seventh embodiment**

| Home cell | Opposite cell | Number of serving cell (intermediate cell) |
|---|---|---|
| ECGI1 | ECGI3 | 3 |
| ECGI1 | ECGI2 | 2 |
| ECGI2 | ECGI3 | 1 |

The number of the serving cells corresponding to the candidate PCI confusion cell pair (ECGI1 and ECGI3) ≥ the threshold of the number of the serving cell. The second optimization possibility coefficient of the candidate PCI confusion cell pair (ECGI1 and ECGI3) is 1;
The number of the serving cells corresponding to the candidate PCI confusion cell pair (ECGI1 and ECGI2) ≥the threshold of the number of the serving cell. The second optimization possibility coefficient of the candidate PCI confusion cell pair (ECGI1 and ECGI2) is 1;
The number of the serving cells corresponding to the candidate PCI confusion cell pair (ECGI2 and ECGI3) < the threshold of the number of the serving cell. The second optimization possibility coefficient of the candidate PCI confusion cell pair (ECGI2 and ECGI3) is 0.5;
Step 204: calculating a third optimization possibility coefficient of the candidate PCI confusion cell pair according to handover performance between the candidate PCI confusion cell pair and the corresponding serving cell.

The number of handover attempt and handover success rate from each serving cell to the candidate PCI confusion cell in the corresponding candidate PCI confusion cell pair are counted within a period of historical information. It is judged whether to satisfy conditions at the same time: "the number of the handover attempts ≥ a threshold of the number of PCI reallocation handover attempt" and "the handover success rate ≤ a threshold of PCI reallocation handover success rate".

In all handover performance of the serving cells -> ECGI1 and the serving cells -> ECGI3, if there is a group of handover performance meeting the above conditions, the third optimization possibility coefficient of the candidate PCI confusion cell pair (ECGI1 and ECGI3) is 1.

In all handover performance of the serving cells -> ECGI1 and the serving cells -> ECGI2, if there is a group of handover performance meeting the above conditions, the third optimization possibility coefficient of the candidate PCI confusion cell pair (ECGI1 and ECGI2) is 1.

In all handover performance of the serving cell-> ECGI2 and the serving cell -> ECGI3, if there is no group of handover performance meeting the above condition, a third optimization possibility coefficient of the candidate PCI confusion cell pair (ECGI12 and ECGI3) is 0.

Step 205: calculating a fourth optimization possibility coefficient of the candidate PCI confusion cell pair according to a PCI multiplexing distance between the two candidate PCI confusion cells in the candidate PCI confusion cell pair.

The distance between two cells (the candidate PCI confusion cells) in the candidate PCI confusion cell pair is calculated according to latitude and longitude of the cells.

The distance between the two cells in the candidate PCI confusion cell pair (ECGI1 and ECGI3) ≥ the PCI multiplexing distance. The fourth optimization possibility coefficient of the candidate PCI confusion cell pair (ECGI1 and ECGI3) is 0;
The distance between the two cells in the candidate PCI confusion cell pair (ECGI1 and ECGI2) ≥ the PCI multiplexing distance. The fourth optimization possibility coefficient of the candidate PCI confusion cell pair (ECGI1 and ECGI2) is 0;
The distance between the two cells in the candidate PCI confusion cell pair (ECGI2 and ECGI3) ≥ the PCI multiplexing distance, a fourth optimization possibility coefficient of the candidate PCI confusion cell pair (ECGI2 and ECGI3) is 0.

Step 206: performing optimization determination of the PCI confusion according to the above all optimization possibility coefficients.

A total coefficient can be obtained by weighted addition of the first to the fourth optimization possibility coefficients of the candidate PCI confusion cell pair in the previous four steps (steps 202 to 205), wherein the total coefficient threshold is set to 1.5 and each of weighting factors is 1 In the case where:
The total optimization possibility coefficient of the candidate PCI confusion cell pair (ECGI1 and ECGI3) = 1+1+1+0 = 3, wherein 3 ≥ a total coefficient threshold, then the candidate PCI confusion cell pair (ECGI1 and ECGI3) is put into a PCI optimization queue;
The total optimization possibility coefficient of the candidate PCI confusion cell pair (ECGI1 and ECGI2) = 0.5+1+1+0 = 2.5, wherein 2.5 ≥ the total coefficient threshold, then the candidate PCI confusion cell pair (ECGI1 and ECGI2) is put into the PCI optimization queue;
The total optimization possibility coefficient of the candidate PCI confusion cell pair (ECGI2 and ECGI3) = 0.5+0.5+0+0 = 1, wherein 1 < total coefficient threshold, then the candidate PCI confusion cell pair (ECGI2 and ECGI3) is excluded and recorded.

The final PCI optimization queue is sent to the PCI reallocation optimization module (PCI optimization module).

Step 207: managing the candidate PCI confusion cell pair that does not satisfy the optimization conditions.

Since the candidate PCI confusion cell pair (ECGI2 and ECGI3) has never appeared in the blacklist of the PCI optimization list, the candidate PCI confusion cell pair (ECGI2 and ECGI3) and the corresponding service cell are recorded and put in a history list of the candidate PCI confusion cell pair that does not satisfy the optimization condition.

### Eighth Embodiment

According to the embodiment, if it is found that the candidate PCI confusion cell pair obtained by pairing is in the blacklist of the PCI optimization list, then the judgment is not made any more, and the candidate PCI confusion cell pair is directly determined not to perform optimization.

Step 301: judging whether the PCI confusion cell pair obtained by pairing exists in the blacklist of the PCI optimization list.

The UE reports three different ECGI1, ECGI2, and ECGI3 for the same PCI. PCI confusion cell pairs (ECGI1 and ECGI3), (ECGI1 and ECGI2), and (ECGI2 and ECGI3) are obtained by pairing. It is found that the candidate PCI confusion cell pair (ECGI2 and ECGI3) has existed in the blacklist of the PCI optimization list, and the corresponding serving cell does not change. Then the judgment is not made any more and the candidate PCI confusion cell (the ECGI2 and ECGI3) will be directly determined not to perform PCI optimization. Other candidate PCI confusion cell pairs (ECGI1 and ECGI3) and (ECGI1 and ECGI2) need to proceed to judge.

Step 302: calculating a first optimization possibility coefficient of the candidate PCI confusion cell pair according to a RSRP value in the ECGI reported from a UE measurement.

The UE reports three different ECGI1, ECGI2, and ECGI3 for the same PCI, and measured signal strengths of RSRP1, RSRP2, and RSRP3 are -90dB, -115dB, and -108dB, respectively, wherein a RSRP threshold is set to -110dB. In the case where:
RSRP1 ≥ RSRP threshold, and RSRP3 ≥ RSRP threshold, a first optimization possibility coefficient of the candidate PCI confusion cell pair (ECGI1 and ECGI3) is 1;
RSRP1 ≥ RSRP threshold, and RSRP2 < RSRP threshold, a first optimization possibility coefficient of the candidate PCI confusion cell pair (ECGI1 and ECGI2) is 0.5;
Step 303: calculating a second optimization possibility coefficient of the candidate PCI confusion cell pair according to the number of the serving cell corresponding to the candidate PCI confusion cell pair.

The remaining two candidate PCI confusion cell pairs as mentioned above are sorted to list the number of the serving cell corresponding to the candidate PCI confusion cell pairs, wherein a threshold of the number of the serving cell is set to 2.

**Table 3: Pairing table of candidate PCI confusion cell pair in the eighth embodiment**

| Home cell | Opposite cell | Number of serving cell (intermediate cell) |
|---|---|---|
| ECGI1 | ECGI3 | 3 |
| ECGI1 | ECGI2 | 1 |

The number of the serving cell corresponding to the candidate PCI confusion cell pair (ECGI1 and ECGI3) ≥ the threshold of the number of the serving cell. The second optimization possibility coefficient of the candidate PCI confusion cell pair (ECGI1 and ECGI3) is 1;
The number of the serving cell corresponding to the candidate PCI confusion cell pair (ECGI1 and ECGI2) < the threshold of the number of the serving cell. The second optimization possibility coefficient of the candidate PCI confusion cell pair (ECGI1 and ECGI2) is 0.5.

Step 304: calculating a third optimization possibility coefficient of the candidate PCI confusion cell pair according to handover performance between the candidate PCI confusion cell pair and the corresponding serving cell.

The number of handover attempt and handover success rate from each serving cell to the candidate PCI confusion cell (the home cell and the opposite cell) in the corresponding candidate PCI confusion cell pair are counted within a period of historical information. It is judged whether to satisfy conditions at the same time: "the number of the handover attempts ≥ a threshold of the number of PCI reallocation handover attempt" and "the handover success rate ≤ a threshold of PCI reallocation handover success rate". In all handover performance of all the serving cells -> ECGI1 and the serving cells ->ECGI3, if there is a group of handover performance meeting the above conditions, the third optimization possibility coefficient of the candidate PCI confusion cell pair (ECGI1 and ECGI3) is 1. In all handover performance of all the serving cells -> ECGI1 and the serving cells ->ECGI2, if there is a group of handover performance meeting the above conditions, the third optimization possibility coefficient of the candidate PCI confusion cell pair (ECGI1 and ECGI2) is 1.

Step 305: calculating a fourth optimization possibility coefficient of the candidate PCI confusion cell pair according to a PCI multiplexing distance between the two candidate PCI confusion cells in the candidate PCI confusion cell pair.

The distance between two cells (the candidate PCI confusion cells) in the candidate PCI confusion cell pair is calculated according to latitude and longitude of the cells.

The distance between the two cells of the candidate PCI confusion cell pair (the ECGI1 and the ECGI3) ≥ the PCI multiplexing distance. The fourth optimization possibility coefficient of the candidate PCI confusion cell pair (ECGI1 and ECGI3) is 0;
The distance between two cells in the candidate PCI confusion cell pair (ECGI1 and ECGI2) ≥ the PCI multiplexing distance. The fourth optimization possibility coefficient of the candidate PCI confusion cell pair (ECGI1 and ECGI2) is 0.

Step 306: performing optimization determination of PCI confusion according to the above all optimization possibility coefficients.

A total coefficient can be obtained by weighted addition of the first to the fourth optimization possibility coefficients of the candidate PCI confusion cell pair in the previous four steps (steps 302 to 305), wherein the total coefficient threshold is 1.5 and each of weighting factors is 1. In the case where:
The total optimization possibility coefficient of the candidate PCI confusion cell pair (ECGI1 and ECGI3)= 1+1+1+0 = 3, wherein 3 ≥ a total coefficient threshold, then the candidate PCI confusion cell pair (ECGI1 and ECGI3) is put into a PCI optimization queue;
The total optimization possibility coefficient of the candidate PCI confusion cell pair (ECGI1 and ECGI2) = 0.5+0.5+1+0 = 2, wherein 2 ≥ the total coefficient threshold, then the candidate PCI confusion cell pair (ECGI1 and ECGI2) is put into the PCI optimization queue;
The final PCI optimization queue is sent to the PCI reallocation optimization module.

Step 307: managing the candidate PCI confusion cell pair that does not satisfy the optimization conditions.

Since the candidate PCI confusion cell pair (ECGI2 and ECGI3) has appeared in the blacklist of the PCI optimization list, the historical list of the candidate PCI confusion cell pair will no longer be added.

### Ninth Embodiment

Collecting of the ECGI measurement report from the UE and recording of the RSRP of the measured received signal usually increases the network element burden. If there is no signal strength RSRP reported by ECGI, the remaining conditions can also be used to determine which candidate PCI confusion cells are to be optimized. The optimized determination method for PCI confusion according to the embodiment includes the following steps:
Step 401: judging whether the PCI confusion cell pair obtained by pairing exists in the blacklist of the PCI optimization list.

If it is found that the candidate PCI confusion cell pair does not exist in the blacklist, then go to Step 402.

Step 402: calculating a second optimization possibility coefficient of the candidate PCI confusion cell pair according to the number of the serving cell corresponding to the candidate PCI confusion cell pair.

The detected candidate PCI confusion cell pairs are sorted to list the number of the serving cell corresponding to the candidate PCI confusion cell pairs, wherein a threshold of the number of the serving cell is set to 2. In the case where:
The number of the serving cell corresponding to the candidate PCI confusion cell pair < the threshold of the number of the serving cell. The second optimization possibility coefficient of the candidate PCI confusion cell pair is 0.5.

Step 402: calculating a third optimization possibility coefficient of the candidate PCI confusion cell pair according to the handover performance between the candidate PCI confusion cell pair and the corresponding serving cell.

The number of handover attempt and handover success rate from each serving cell to the candidate PCI confusion cell (the home cell and the opposite cell) in the corresponding candidate PCI confusion cell pair are counted within a period of historical information. It is judged whether to satisfy conditions at the same time: "the number of the handover attempts ≥ a threshold of the number of PCI reallocation handover attempt" and "the handover success rate ≤ a threshold of PCI reallocation handover success rate". In all handover performance of the all serving cells -> PCI confusion cell, if there is a group of handover performance meeting the above conditions, the third optimization possibility coefficient of the PCI confusion cell pair is 1 (otherwise it is 0).

Step 403: calculating a fourth optimization possibility coefficient of the candidate PCI confusion cell pair according to a PCI multiplexing distance between the two cells in the candidate PCI confusion cell pair.

The distance between two cells in the candidate PCI confusion cell pair is calculated according to latitude and longitude of the cells. In the case where:
The distance between two cells in the candidate PCI confusion cell pair ≥ the PCI multiplexing distance, then the fourth optimization possibility coefficient of the candidate PCI confusion cell pair is 0 (otherwise it is 1).

Step 404: performing optimization determination of PCI confusion according to the above all optimization probability coefficients.

Specifically, a total coefficient can be obtained by weighted addition of the first to the fourth optimization possibility coefficients of the PCI confusion cell pair in previous four steps, wherein the total coefficient threshold is 1 and each of weighting factors is 1, In the case where:

The total optimization possibility coefficient of the candidate PCI confusion cell pair = 0.5+1+0 = 1.5, wherein 1.5 ≥ a total coefficient threshold, then the candidate PCI confusion cell pair is put into a PCI optimization queue.

Step 405: managing of the candidate PCI confusion cell pair that does not satisfy the optimization conditions.

Since the candidate PCI confusion cell pair needing PCI optimization, it is not necessary to deal with the history list of the candidate PCI confusion cell pair.

In the above embodiments, the total optimization possibility coefficient of the candidate PCI confusion cell pair is obtained by weighted addition of the optimization possibility coefficients of the candidate PCI confusion cell pair, and each of weighting factors is 1. However, those people skilled in the art should understand that the various weighting factors may also differ from each other or partially the same. In addition, when the total coefficient of optimization possibility of the candidate PCI confusion cell pair is calculated by using the optimization possibility coefficients, other calculation methods other than weighted addition may be employed.

In addition, those people skilled in the art should understand that the above various modules or steps of the present disclosure can be implemented by a general-purpose computing device, which can be integrated on a single computing device or distributed over a network composed of multiple computing devices. Alternatively, the various modules or steps may be implemented by program code executable by the computing device such that they may be stored in a storage device to be executed by the computing device. In some cases, the steps shown or described may be executed in an order different from the order herein, or they are separately fabricated into individual integrated circuit modules, or a plurality of modules or steps thereof are fabricated as a single integrated circuit module. Thus, the disclosure is not limited to any particular combination of hardware and software.

In summary, the embodiments of the present disclosure have the following technical effects:
There is provided an optimized determination method for PCI confusion applicable to the LTE network in embodiments of the present disclosure. After the PCI confusion is detected, the PCI is not optimized immediately but a decision strategy is given according to information such as Key Performance Indicator (KPI) record of the handover performance saved by the network management to finally determine whether to optimize the detected PCI confusion. Therefore, the PCI confusion cell pairs that really have an impact on the system can be screened out. At the same time, it is possible to reduce the unnecessary PCI optimization operation of the network management, avoid the cell deletion and establishment caused by unnecessary PCI reallocation, and reduce the impact on the UE experience and the impact of the cell deletion and establishment on the network.

Although the present disclosure has been described in detail above, the disclosure is not limited thereto, and various modifications may be made by those skilled in the art in accordance with the principles of the disclosure. Therefore, modifications made in accordance with the principles of the present disclosure should be considered as falling within the scope of the present disclosure.

## Claims

1. An optimized determination method for Physical Cell Identifier PCI confusion, comprising:
detecting cells that are adjacent to a serving cell and have a same frequency point and a same PCI with each other to serve as candidate PCI confusion cells;
pairing the candidate PCI confusion cells to obtain all candidate PCI confusion cell pairs by pairing any two of the candidate PCI confusion cells to one candidate PCI confusion cell pair;
determining a degree of influence of each candidate PCI confusion cell pair on communication performance; and
determining a corresponding candidate PCI confusion cell pair to be a PCI confusion cell pair needing PCI optimization according to the degree of the influence of each candidate PCI confusion cell pair on the communication performance.

2. The method according to claim 1, wherein the step of detecting the cells that are adjacent to the serving cell and have the same frequency point and the same PCI with each other to serve as the candidate PCI confusion cells, comprises:
determining whether the same PCI corresponds to at least two different E-UTRAN Cell Global Identifiers ECGIs by using an ECGI measurement report from a User Equipment UE, wherein
in the case where it is determined that the same PCI corresponds to at least two different ECGIs, the respective cells corresponding to the at least two different ECGIs are determined to be the candidate PCI confusion cells.

3. The method according to claim 2, wherein the step of determining the degree of the influence of each candidate PCI confusion cell pair on the communication performance, comprises:
calculating a total optimization possibility coefficient of each candidate PCI confusion cell pair, and determining the degree of the influence according to the total optimization possibility coefficient.

4. The method according to claim 3, wherein the step of calculating the total optimization possibility coefficient of each candidate PCI confusion cell pair, comprises:
calculating the total optimization possibility coefficient of each candidate PCI confusion cell pair by using at least one of a first optimization possibility coefficient, a second optimization possibility coefficient, a third optimization possibility coefficient, and a fourth optimization possibility coefficient of each candidate PCI confusion cell pair, wherein
the first optimization possibility coefficient of each candidate PCI confusion cell pair is determined according to a value of a reference signal receiving power RSRP of an ECGI measurement report from a UE;
the second optimization possibility coefficient of each candidate PCI confusion cell pair is determined according to a number of a corresponding serving cell of the each candidate PCI confusion cell pair;
the third optimization possibility coefficient of each candidate PCI confusion cell pair is determined according to handover performance between the each candidate PCI confusion cell pair and a corresponding serving cell of the each candidate PCI confusion cell pair; and
the fourth optimization possibility coefficient of each candidate PCI confusion cell pair is determined according to a PCI multiplexing distance between two candidate PCI confusion cells in the each candidate PCI confusion cell pair.

5. The method according to claim 3 or claim 4, wherein the step of determining the corresponding candidate PCI confusion cell pair to be the PCI confusion cell pair needing PCI optimization according to the degree of the influence of each candidate PCI confusion cell pair on the communication performance, comprises:
comparing the total optimization possibility coefficient of each candidate PCI confusion cell pair with a preset total coefficient threshold; and
determining a candidate PCI confusion cell pair with the total optimization possibility coefficient greater than the preset total coefficient threshold to be the PCI confusion cell pair needing PCI optimization.

6. An optimized determination device for PCI confusion, comprising:
a detection module, configured to detect cells that are adjacent to a serving cell and have a same frequency point and a same PCI with each other to serve as candidate PCI confusion cells;
a pairing module, configured to pair the candidate PCI confusion cells to obtain all candidate PCI confusion cell pairs by pairing any two of the candidate PCI confusion cells to one candidate PCI confusion cell pair;
a calculation module, configured to determine a degree of influence of each candidate PCI confusion cell pair on communication performance; and
a determination module, configured to determine a corresponding candidate PCI confusion cell pair to be a PCI confusion cell pair needing PCI optimization according to the degree of the influence of each candidate PCI confusion cell pair on the communication performance.

7. The device according to claim 6, wherein the detection module is configured to determine whether the same PCI corresponds to at least two different E-UTRAN Cell Global Identifiers ECGIs by using an ECGI measurement report from a User Equipment UE, wherein in the case where it is determined that the same PCI corresponds to at least two different ECGIs, the respective cells corresponding to the at least two different ECGIs are determined to be the candidate PCI confusion cells.

8. The device according to claim 7, wherein, the calculation module is configured to calculate a total optimization possibility coefficient of each candidate PCI confusion cell pair, and determine the degree of the influence of each candidate PCI confusion cell pair on the communication performance according to the total optimization possibility coefficient.

9. The device according to claim 8, the calculation module is configured to determine at least one of optimization possibility coefficients of each candidate PCI confusion cell pair and calculate the total optimization possibility coefficient of each candidate PCI confusion cell pair according to the determined at least one of the optimization possibility coefficients, the optimization possibility coefficients comprising:
a first optimization possibility coefficient, which is determined according to a value of a reference signal receiving power RSRP of an ECGI measurement report from a UE by the calculation module;
a second optimization possibility coefficient, which is determined according to the number of a corresponding serving cell of each candidate PCI confusion cell pair by the calculation module;
a third optimization possibility coefficient, which is determined according to handover performance between each candidate PCI confusion cell pair and a corresponding serving cell of the each candidate PCI confusion cell pair by the calculation module; and
a fourth optimization possibility coefficient, which is determined according to a PCI multiplexing distance between two candidate PCI confusion cells in each candidate PCI confusion cell pair by the calculation module.

10. The device according to claim 8 or 9, wherein, the determination module is configured to compare the total optimization possibility coefficient of each candidate PCI confusion cell pair with a preset total coefficient threshold, and
determine a candidate PCI confusion cell pair with the total optimization possibility coefficient greater than the preset total coefficient threshold to be the PCI confusion cell pair needing PCI optimization.

11. An optimized determination method for cell PCI confusion of an LTE network of a co-frequency networking, comprising:
for each cell in the LTE network, judging whether at least two cells outside of the cell having a same frequency point and a same PCI are detected by using an ECGI measurement report from a User Equipment UE, wherein if a judgment result is yes, the cell is considered as a serving cell, and the at least two cells having the same frequency point and the same PCI are considered as candidate PCI confusion cells corresponding to the serving cell;
for each serving cell in the LTE network, pairing the candidate PCI confusion cells to obtain all candidate PCI confusion cell pairs corresponding to the serving cell by pairing any two of the candidate PCI confusion cells corresponding to the serving cell to one candidate PCI confusion cell pair; and
determining whether to perform PCI optimization for each candidate PCI confusion cell pair according to a degree of influence of the each candidate PCI confusion cell pair on communication performance.

12. The method according to claim 11, comprising:
determining the degree of the influence of each candidate PCI confusion cell pair on the communication performance according to at least one of optimization possibility coefficients of each candidate PCI confusion cell pair, the optimization possibility coefficients comprising:
a first optimization possibility coefficient, which is determined according to a value of a reference signal receiving power RSRP of an ECGI measurement report corresponding to each candidate PCI confusion cell pair;
a second optimization possibility coefficient, which is determined according to a number of a corresponding serving cell of each candidate PCI confusion cell pair;
a third optimization possibility coefficient, which is determined according to handover performance between each candidate PCI confusion cell pair and a corresponding serving cell of the each candidate PCI confusion cell pair; and
a fourth optimization possibility coefficient, which is determined according to a PCI multiplexing distance between two candidate PCI confusion cells in each candidate PCI confusion cell pair and a distance between the two candidate PCI confusion cells.
